# FASCICULE DE BREVET EUROPEEN

(11) **EP 3 257 295 B1**
(45) Date de publication et mention de la délivrance du brevet: **27.11.2019**
(21) Numéro de dépôt: 16707188.5
(22) Date de dépôt: 10.02.2016
(51) Int. Cl.: H04W 36/08, H04W 36/16

(54) **PROCÉDÉ DE CONFIGURATION D'UN TERMINAL CONNECTE A UN RÉSEAU DE COMMUNICATION**
VERFAHREN ZUR KONFIGURATION EINES MIT EINEM KOMMUNIKATIONSNETZWERK VERBUNDENEN ENDGERÄTS
METHOD FOR CONFIGURING A TERMINAL CONNECTED TO A COMMUNICATION NETWORK

(30) Priorité: 13.02.2015 FR 1551210
(43) Date de publication de la demande: 20.12.2017
(73) Titulaire: Orange, 75015 Paris (FR)
(72) Inventeur: BOUVET, Bertrand, 22700 Perros Guirec (FR); PETESCH, Fabrice, 92326 Chatillon Cedex (FR)
(86) Numéro de dépôt international: PCT/FR2016/050295
(87) Numéro de publication internationale: WO 2016/128676

(56) Documents cités:
- EP-A1- 1 257 141
- US-A1- 2006 246 901
- US-A1- 2012 314 571
- US-B1- 6 973 303

## Description

L'invention se situe dans le domaine des réseaux de communication mobiles. Elle concerne un dispositif et un procédé de configuration d'un terminal pour accéder à un service de communication lorsque le terminal est connecté à un réseau de communication différent du réseau de communication nominal.

Le service VoLTE (pour Voice over Long Term Evolution en anglais) est un service de communication de type voix fourni sur un réseau de communication mobile depuis un réseau d'accès 4G. Un réseau de communication mobile permettant de fournir un service de communication VoLTE est par exemple basé sur une infrastructure classique de réseau téléphonique circuit et de réseau de données (data en anglais) 2G/3G/4G. Le cœur du réseau de communication ou sous-système du réseau de communication est par exemple basé sur une architecture IMS (pour IP- Internet Protocol - Multimedia Subsystem en anglais) et une architecture IP EPC (pour Internet Protocol Evolved Packet Core en anglais). Le service VoLTE est par exemple défini dans la norme GSMA IR92 -IMS Profile for Voice and SMS, Version 7.0, 3 Mars 2013.

De telles architectures et infrastructures sont également utilisées pour fournir d'autres services de communication aux terminaux connectés au réseau mobile. Par exemple, un service de communications enrichies de type RCS (Rich Communication Suite en anglais) peut être fourni. Le service RCS est par exemple défini dans la norme GSMA RCC61, RCS Common Core Service Description Document, version 1.0, 16 Septembre 2014.

Pour qu'un terminal puisse supporter un service de communication de type VoLTE ou RCS, il est nécessaire que le terminal dispose d'un mécanisme de pile protocolaire, autrement appelée pile SIP IMS lorsque le protocole utilisé est le protocole SIP (pour Session Initiation Protocol en anglais). Une telle pile protocolaire permet au terminal de communiquer avec le sous-système du réseau de communication mobile IMS. La pile SIP IMS du terminal permet au terminal de s'enregistrer dans le sous-système du réseau de communication mobile IMS via le protocole SIP (pour Session Initiation Protocol en anglais), puis de recevoir et/ou d'émettre des communications selon un service de communication basé sur une architecture IMS. De tels services de communication sont par exemple le service de communication VoLTE, RCS, ViLTE (pour Video over LTE en anglais), VoWIFI (pour Voice over WIFI en anglais).

Afin d'économiser la batterie du terminal et réduire le nombre de message de signalisation dans le réseau de communication mobile, une seule pile SIP IMS peut être utilisée dans le terminal pour assurer plusieurs services de communication basés sur l'architecture IMS. Ainsi, par exemple, pour un terminal apte à mettre en œuvre un service de communication VoLTE et un service de communication RCS, les flux de signalisation pour des communications VoLTE ou RCS seront transmis selon le protocole SIP vers le sous-système IMS, les flux média pour une communication VoLTE seront transmis selon le protocole RTP/RTCP et les flux média pour une communication RCS de type messaging (messagerie en français) seront transmis selon le protocole MSRP.

On suppose que le réseau de communication d'un opérateur auprès duquel un utilisateur est abonné met en œuvre un tel mécanisme selon lequel une seule pile SIP IMS est nécessaire pour assurer plusieurs services de communication basés sur l'architecture IMS. Le réseau de communication de l'opérateur auprès duquel un utilisateur est abonné est couramment appelé réseau nominal ou réseau HOME. Lorsqu'un utilisateur démarre son terminal, le terminal se connecte automatiquement à son réseau de communication HOME lorsqu'un point d'accès à un tel réseau est accessible pour le terminal.

Lorsque l'utilisateur change de localisation, par exemple, lorsqu'il change de pays, le réseau de communication HOME peut ne plus être disponible si l'opérateur auprès duquel l'utilisateur est abonné n'a pas déployé d'infrastructures dans un tel pays.

Dans ce cas, en général, l'opérateur auprès duquel l'utilisateur est abonné a négocié des accords de « roaming», (ou itinérance en français) avec un ou plusieurs autre(s) opérateur(s) qui dispose(nt) des infrastructures de réseau de communication dans le pays dans lequel se trouve l'utilisateur. Un tel réseau de communication est appelé par la suite réseau visité. Lorsqu'un terminal est connecté à un réseau visité, on dit que le terminal est en situation de « roaming out » en anglais ou d'itinérance en français.

De tels accords permettent d'établir physiquement des interconnexions entre le réseau de communication visité et le réseau de communication nominal. Ainsi, lorsque le terminal de l'utilisateur peut se connecter au réseau de communication visité, il peut accéder à des services de communication fournis par le réseau de communication visité ou le réseau de communication nominal.

Les services accessibles par le terminal de l'utilisateur lorsque le terminal est connecté à un réseau de communication visité dépendent des interconnexions établies, et donc des accords négociés entre les deux opérateurs. Ainsi, par exemple, il est possible qu'une interconnexion soit établie entre le réseau de communication visité et le réseau de communication nominal pour fournir un service de communication VoLTE au terminal de l'utilisateur lorsque ce terminal est connecté au réseau de communication visité.

Mais il est aussi possible qu'une interconnexion ne soit pas établie entre le réseau de communication visité et le réseau de communication nominal pour fournir un service de communication RCS. Par exemple, l'absence d'une telle interconnexion peut être causée par l'absence d'accords de « roaming» entre les deux opérateurs pour ce service de communication, ou parce que le réseau de communication visité n'est pas apte à assurer le service de communication RCS, par exemple parce que le réseau de communication visité manque de ressources réseaux dédiées au service en question.

Ainsi, lorsque le terminal d'un utilisateur est connecté à un réseau de communication visité, l'utilisateur subit une perte de qualité d'expérience puisque l'utilisateur n'a alors plus accès à des services, par exemple le service RCS dans notre exemple, auxquels il a d'habitude accès lorsque son terminal est connecté au réseau de communication nominal.

Le document EP-A1-1257141 décrit la re-sélection d'un point d'accès en fonction d'un service requis/souhaité, tel que généralement désigné par 'service handover" en Anglais. Une telle technique de "service handover" assisté par le réseau et permettant à un terminal connecté à un réseau de communication via un premier point d'accès réseau, d'accéder à un service de communication donné via un deuxième point d'accès réseau.

### Exposé de l'invention

Un des buts de l'invention est d'apporter des améliorations par rapport à l'état de la technique. Elle propose à cet effet un procédé de configuration d'un terminal d'un utilisateur abonné auprès d'un opérateur d'un réseau de communication, dit réseau nominal, pour accéder à un service de communication. Le terminal est configuré pour accéder à un premier service de communication via un premier point d'accès réseau. Le procédé de configuration comprend, lorsque le terminal est connecté à un réseau de communication différent du réseau nominal, dit réseau visité :
- une étape d'obtention d'une donnée indiquant si le terminal peut accéder à un deuxième service de communication via ledit premier point d'accès réseau,
- dans le cas où le terminal ne peut pas accéder au deuxième service de communication via le premier point d'accès réseau :
   - une étape de détermination d'un deuxième point d'accès réseau à utiliser par le terminal pour accéder au deuxième service de communication,
   - une étape de configuration du terminal pour que le terminal puisse accéder au deuxième service de communication via le deuxième point d'accès réseau.

Corrélativement l'invention concerne un terminal d'un utilisateur abonné auprès d'un opérateur d'un réseau de communication, dit réseau nominal, pour accéder à un service de communication. Le terminal est configuré pour accéder à un premier service de communication via un premier point d'accès réseau. Lorsque le terminal est connecté à un réseau de communication différent du réseau nominal, dit réseau visité, un tel terminal est configuré pour :
- obtenir une donnée indiquant si le terminal peut accéder à un deuxième service de communication via ledit premier point d'accès réseau,
- dans le cas où le terminal ne peut pas accéder au deuxième service de communication via le premier point d'accès réseau, le terminal est configuré pour :
   - déterminer un deuxième point d'accès réseau à utiliser par le terminal pour accéder au deuxième service de communication,
   - accéder au deuxième service de communication via le deuxième point d'accès réseau.

Par exemple, le premier service de communication est un service de communication VoLTE ou ViLTE pour lequel l'opérateur du réseau visité et l'opérateur du réseau nominal ont négocié des accords d'interconnexion. Le deuxième service de communication peut être un service de communication RCS pour lequel l'opérateur du réseau visité et l'opérateur du réseau nominal n'ont pas négocié d'accord d'interconnexion ou le réseau visité n'est pas apte à fournir le service de communication RCS.

Lorsque le terminal est connecté au réseau nominal, une même pile protocolaire activée dans le terminal est utilisée pour fournir le premier et le deuxième service de communication au terminal. Lorsque le terminal est connecté au réseau visité via un premier point d'accès réseau utilisé pour transporter le premier service de communication, une première pile protocolaire est activée au sein du terminal et associée au premier point d'accès réseau.

Selon l'invention, lorsque le deuxième service de communication ne peut pas être transporté via le premier point d'accès réseau, le terminal se configure de sorte qu'il puisse accéder au deuxième service de communication via un deuxième point d'accès réseau. Par exemple, une étape de configuration du terminal correspond à l'activation dans le terminal d'une deuxième pile protocolaire associée au deuxième point d'accès réseau. Ainsi, le deuxième service de communication est fourni au terminal via la deuxième pile protocolaire et transporté via le deuxième point d'accès réseau. Un tel deuxième point d'accès réseau peut être un point d'accès réseau du réseau visité ou du réseau nominal.

L'utilisateur du terminal peut ainsi accéder au deuxième service de communication lorsqu'aucun accord de « roaming » n'a été négocié entre les opérateurs pour le deuxième service de communication ou lorsque le réseau visité ne dispose pas des ressources nécessaires pour la mise en œuvre du deuxième service de communication. L'utilisateur n'a ainsi pas de perte d'accès à ses services de communication lorsqu'il est en situation de « roaming out ».

Avantageusement, la deuxième pile protocolaire n'est activée dans le terminal que lorsque le terminal détecte que le deuxième service de communication ne peut pas être transporté par le premier point d'accès réseau. Ainsi, la consommation de la batterie du terminal est optimisée puisque la deuxième pile protocolaire n'est activée que lorsque cela est nécessaire. De plus, les ressources du réseau nominal sont également optimisées.

L'invention s'applique préférentiellement aux réseaux de communication mobiles puisque le problème du roaming ne se pose que pour ce type de réseaux de communication.

Les différents modes ou caractéristiques de réalisation mentionnés ci-après peuvent être ajoutés indépendamment ou en combinaison les uns avec les autres, aux caractéristiques du terminal défini ci-dessus. Les différents modes ou caractéristiques de réalisation mentionnés ci-après peuvent être ajoutés indépendamment ou en combinaison les uns avec les autres, aux étapes du procédé de configuration défini ci-dessus.

Selon un mode particulier de réalisation de l'invention, la donnée indiquant si le terminal peut accéder à un deuxième service de communication via ledit premier point d'accès réseau est obtenue à partir d'un message de réponse à une requête envoyée par le terminal à un serveur du réseau nominal, via le premier point d'accès réseau.

Selon ce mode particulier de réalisation de l'invention, le terminal utilise le premier point d'accès réseau pour obtenir la donnée indiquant si le terminal peut accéder au deuxième service de communication via un tel point d'accès. Ce mode particulier de réalisation de l'invention procure l'avantage de ne pas nécessiter l'utilisation d'un autre point d'accès réseau pour obtenir la donnée en question. En effet, le terminal utilise ainsi un point d'accès réseau déjà utilisé pour accéder au premier service de communication pour obtenir la donnée. Ainsi, le terminal n'active une seconde pile protocolaire que lorsque la donnée reçue indique que le deuxième service de communication ne peut être transporté via le premier point d'accès réseau.

Avantageusement, la requête est relative au deuxième service de communication. Elle est envoyée suite à l'enregistrement du terminal auprès du réseau nominal pour le premier ou le deuxième service de communication.

Ainsi, selon cette variante, la configuration du terminal pour assurer le deuxième service de communication est effectuée dès l'enregistrement du terminal. Il n'est pas nécessaire d'attendre une tentative d'établissement d'une communication selon le deuxième service de communication, ou le téléchargement d'un fichier de configuration relatif au deuxième service de communication. Selon un autre mode particulier de réalisation de l'invention, la requête est:
- une requête d'enregistrement envoyée à un serveur d'enregistrement pour enregistrer le terminal pour au moins le premier service de communication ou pour au moins le deuxième service de communication, ou
- un message d'interrogation envoyé à un serveur d'application, ledit serveur d'application étant un serveur dédié au deuxième service de communication, ou
- un message de souscription à un mécanisme de souscription-notification relatif à un évènement correspondant à la situation selon laquelle le terminal est connecté à un réseau différent du réseau nominal.

Selon ce mode particulier de réalisation de l'invention, pour obtenir la donnée indiquant si le terminal peut accéder au deuxième service de communication via le premier point d'accès réseau, le terminal utilise des messages de signalisation (enregistrement, interrogation, souscription) conforme à un protocole de signalisation que le premier point d'accès réseau est apte à transporter. Selon les différentes alternatives de ce mode particulier de réalisation de l'invention, la donnée peut être obtenue via le premier point d'accès réseau même si le premier point d'accès réseau ne peut pas être utilisé pour transporter les flux média relatifs au deuxième service de communication. De telles alternatives proposent des mises en œuvre de l'invention permettant de limiter la modification des infrastructures des réseaux de communication, puisque seuls les serveurs du réseau nominal sont impactés. Ainsi, la mise en œuvre de l'invention est indépendante des infrastructures du réseau visité.

Selon un autre mode particulier de réalisation de l'invention, ledit message de réponse comprend une donnée indiquant le deuxième point d'accès réseau.

Avantageusement, selon ce mode particulier de réalisation de l'invention, le message de réponse comprend une information permettant au terminal de déterminer le deuxième point d'accès réseau. Une telle information est fournie par un serveur de gestion des communications du réseau nominal. Le terminal peut ainsi activer une deuxième pile protocolaire associée au deuxième point d'accès réseau en fonction de critères définis par l'opérateur du réseau nominal.

Selon un autre mode particulier de réalisation de l'invention, la donnée indiquant si le terminal peut accéder à un deuxième service de communication via ledit premier point d'accès réseau est obtenue à partir d'un fichier de configuration relatif au deuxième service de communication reçu par le terminal depuis un serveur du réseau nominal.

Selon ce mode particulier de réalisation de l'invention, le terminal est informé par le réseau nominal que le deuxième service de communication ne peut pas être fourni via le premier point d'accès réseau, au moment où le terminal effectue les étapes de configuration pour fournir le deuxième service de communication, tel qu'au démarrage du terminal, ou lorsqu'une période de validité d'enregistrement pour le deuxième service de communication a expiré, ou encore lorsque l'enregistrement du terminal pour le deuxième service de communication n'a pas abouti.

Selon un autre mode particulier de réalisation de l'invention, le fichier de configuration comprend une donnée indiquant un point d'accès réseau à utiliser lorsque le terminal est connecté au réseau visité.

Selon ce mode particulier de réalisation de l'invention, la deuxième pile protocolaire est activée dans le terminal lorsque le point d'accès réseau fourni dans le fichier de configuration et le premier point d'accès réseau du réseau visité sont différents.

Avantageusement, lorsque le point d'accès réseau fourni dans le fichier de configuration et le premier point d'accès réseau du réseau visité sont différents, le terminal sait quel point d'accès réseau du réseau visité doit être associé à la deuxième pile protocolaire activée.

Selon un autre mode particulier de réalisation de l'invention, la donnée indiquant si le terminal peut accéder à un deuxième service de communication via ledit premier point d'accès réseau est obtenue à partir d'une donnée associée au premier point d'accès réseau obtenue lors de la procédure d'attachement du terminal au réseau visité.

Selon ce mode particulier de réalisation de l'invention, des données relatives aux services supportés par un point d'accès réseau d'un réseau de communication sont fournies au terminal lorsque le terminal s'attache au réseau de communication visité. Ainsi, dès la connexion du terminal au réseau de communication via le point d'accès réseau, le terminal connait les services de communication supportés par ledit point d'accès réseau.

L'invention concerne également un procédé de fourniture à un terminal d'un utilisateur abonné auprès d'un opérateur d'un réseau de communication, dit réseau nominal, d'une donnée indiquant si le terminal peut accéder à un premier service de communication via un premier point d'accès réseau. Un tel procédé de fourniture comprend :
- une étape de réception par un serveur du réseau nominal, d'une requête relative au premier service de communication, envoyée par le terminal via le premier point d'accès réseau, la requête étant une requête d'enregistrement du terminal pour au moins le premier service de communication auprès du réseau nominal, ledit premier point d'accès réseau étant utilisé par le terminal pour accéder à un deuxième service de communication,
- une étape de détection que le terminal est connecté à un réseau de communication différent du réseau nominal, dit réseau visité,
- lorsque le terminal est connecté au réseau visité, une étape de détermination d'une donnée indiquant si le terminal peut accéder au premier service de communication via ledit premier point d'accès réseau,
- une étape d'envoi au terminal d'un message comprenant d'un message comprenant ladite donnée.

Corrélativement, l'invention concerne un dispositif de fourniture à un terminal d'un utilisateur abonné auprès d'un opérateur d'un réseau de communication, dit réseau nominal, d'une donnée indiquant si le terminal peut accéder à un premier service de communication via un premier point d'accès réseau. Un tel dispositif de fourniture est configuré pour:
- recevoir une requête relative au premier service de communication envoyée par le terminal, via le premier point d'accès réseau, la requête étant une requête d'enregistrement du terminal pour au moins le premier service de communication auprès du réseau nominal, ledit premier point d'accès réseau étant utilisé par le terminal pour accéder à un deuxième service de communication,
- détecter si le terminal est connecté à un réseau de communication différent du réseau nominal, dit réseau visité,
- lorsque le terminal est connecté au réseau visité, déterminer une donnée indiquant si le terminal peut accéder au premier service de communication via ledit premier point d'accès réseau,
- envoyer au terminal un message comprenant ladite donnée.

Selon l'invention, l'opérateur du réseau nominal peut adapter la configuration du terminal pour l'accès du terminal à un service de communication lorsque le terminal est connecté à un réseau visité.

Les différents modes ou caractéristiques de réalisation mentionnés ci-après peuvent être ajoutés indépendamment ou en combinaison les uns avec les autres, aux caractéristiques du dispositif défini ci-dessus. Les différents modes ou caractéristiques de réalisation mentionnés ci-après peuvent être ajoutés indépendamment ou en combinaison les uns avec les autres, aux étapes du procédé de fourniture défini ci-dessus.

Selon un mode particulier de réalisation de l'invention, le procédé de fourniture comprenant en outre une étape de détermination d'un deuxième point d'accès réseau à utiliser par le terminal pour accéder au premier service de communication, le message envoyé comprenant un identifiant du deuxième point d'accès réseau.

Ainsi, le serveur du réseau nominal peut adapter dynamiquement le point d'accès réseau que le terminal doit utiliser pour accéder au premier service de communication. Par exemple, lorsque les accords de « roaming » entre opérateurs sont modifiés, l'opérateur du réseau nominal peut mettre à jour les informations dans ses bases de données. CE mode particulier de réalisation de l'invention ne nécessite pas de modifier le fonctionnement du terminal lorsque les accords entre opérateurs sont modifiés.

De plus, l'opérateur du réseau nominal peut mettre en place une politique permettant d'adapter le point d'accès réseau à utiliser en fonction de l'abonnement de l'utilisateur. Un tel abonnement peut être modifié régulièrement par l'utilisateur. Ou encore, l'opérateur du réseau nominal peut adapter le point d'accès réseau en fonction de l'accord de « roaming » négocié, par exemple si l'accord spécifie un nombre de connexions maximal autorisé via le premier point d'accès réseau, etc...

Selon un autre mode particulier de réalisation de l'invention, le message est un fichier de configuration relatif au premier service de communication.

Selon ce mode particulier de réalisation de l'invention, lorsque l'accès au premier service de communication est configuré par le téléchargement d'un fichier de configuration, par exemple pour le service de communications enrichies RCS, l'opérateur du réseau nominal peut mettre à jour dynamiquement le fichier de configuration relatif à un tel service de communication lorsque le terminal demande le téléchargement du fichier de configuration relatif au premier service de communication. Ainsi, l'opérateur du réseau nominal peut adapter dynamiquement l'accès du terminal aux services fournis au terminal en prenant en compte le fait que le terminal est connecté à un réseau visité et non au réseau nominal.

Selon un autre mode particulier de réalisation de l'invention, la requête relative au premier service de communication est :
- une requête d'enregistrement du terminal pour au moins le premier service de communication auprès du réseau nominal, , ledit premier point d'accès réseau étant utilisé par le terminal pour accéder à un deuxième service de communication,
- un message d'interrogation envoyé à un serveur d'application, ledit serveur d'application étant un serveur dédié au deuxième service de communication, ou
- un message de souscription à un mécanisme de souscription-notification relatif à un évènement correspondant à la situation selon laquelle le terminal est connecté à un réseau différent du réseau nominal.

Selon ce mode particulier de réalisation de l'invention, l'opérateur du réseau nominal peut informer le terminal via des mécanismes de signalisation aptes à être transportés via le premier point d'accès réseau.

Selon les différentes alternatives de ce mode particulier de réalisation de l'invention, l'opérateur du réseau nominal peut informer le terminal d'un point d'accès réseau à utiliser pour accéder au premier service de communication, dès l'enregistrement du terminal auprès du réseau nominal.

Selon un autre mode particulier de réalisation de l'invention, le deuxième point d'accès réseau via lequel la requête relative au premier service de communication est envoyée par le terminal est un point d'accès réseau du réseau visité.

Selon ce mode particulier de réalisation de l'invention, les opérateurs du réseau visité et du réseau nominal ont négocié des accords d'interconnexion pour au moins le deuxième service de communication. Par exemple, le deuxième service de communication est un service de communication VoLTE ou ViLTE. Le terminal peut ainsi utiliser le deuxième point d'accès réseau du réseau visité pour s'enregistrer auprès du réseau nominal pour le premier service de communication.

Dans un mode particulier de réalisation de l'invention, les différentes étapes du procédé de configuration et du procédé de fourniture sont mises en œuvre par des instructions de programmes d'ordinateurs.

En conséquence, l'invention vise aussi des programmes d'ordinateur sur un support d'informations, ces programmes étant susceptibles d'être mis en œuvre respectivement dans un terminal ou plus généralement dans un ordinateur, ces programmes comportant respectivement des instructions adaptées à la mise en œuvre des différentes étapes du procédé de configuration et des différentes étapes du procédé de fourniture qui viennent d'être décrits.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique ou électronique, par exemple une clé USB ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé de configuration ou du procédé de fourniture en question.

Les avantages du programme d'ordinateur comportant des instructions adaptées à la mise en œuvre des différentes étapes du procédé de configuration et du programme d'ordinateur comportant des instructions adaptées à la mise en œuvre des différentes étapes du procédé de fourniture sont identiques à ceux présentés en relation avec le procédé de configuration et à ceux présentés en relation avec le procédé de fourniture selon l'un quelconque des modes particuliers de réalisation mentionnés ci-dessus.

### Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels:
- la figure 1 illustre un mécanisme de fourniture d'un premier et un deuxième service de communication à un terminal mobile lorsqu'il est connecté à son réseau nominal,
- la figure 2 illustre un mécanisme de fourniture d'un premier et un deuxième service de communication à un terminal mobile lorsqu'il est connecté à un réseau visité,
- la figure 3 illustre des étapes du procédé de configuration selon un mode particulier de réalisation de l'invention,
- la figure 4 illustre des étapes du procédé de fourniture selon un mode particulier de réalisation de l'invention,
- la figure 5 illustre un dispositif adapté pour mettre en œuvre le procédé de configuration selon un mode particulier de réalisation de l'invention,
- la figure 6 illustre un dispositif adapté pour mettre en œuvre le procédé de fourniture selon un mode particulier de réalisation de l'invention.

### Description d'un mode particulier de réalisation de l'invention

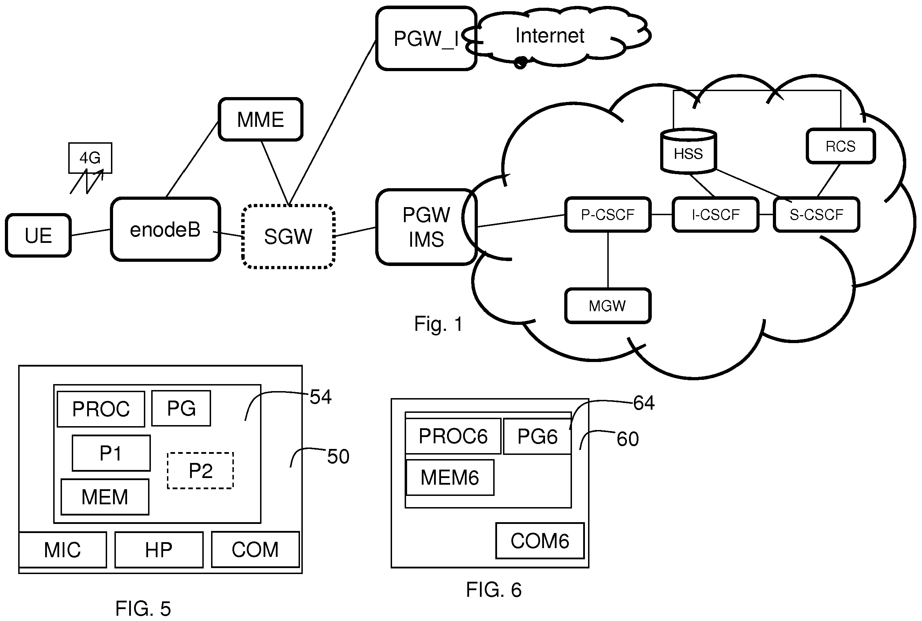

La figure 1 illustre schématiquement comment un terminal UE accède aux services VoLTE et RCS fournis par l'opérateur auprès duquel l'utilisateur du terminal UE est abonné lorsque ce terminal UE est connecté au réseau de communication mobile d'un tel opérateur. Un tel réseau de communication est aussi appelé par l'homme du métier réseau nominal ou réseau HOME.

Après son démarrage, le terminal UE se connecte au réseau de communication mobile selon la procédure d'attachement réseau connue de l'homme du métier. Le terminal UE se connecte selon la technologie radio 4G à une antenne eNodeB à proximité du terminal en émettant une requête AttachRequest vers l'eNodeB. L'eNodeB sélectionne alors un serveur MME (pour Mobility Management Entity en anglais) et relaie la requête d'attachement au MME sélectionné. Le serveur MME effectue l'authentification du terminal UE à partir des données d'authentification issues du terminal UE et de données d'authentification obtenues auprès d'un serveur HSS du réseau nominal. Lorsque l'authentification auprès du MME est réussie, le serveur MME envoie au serveur HSS un message comprenant les paramètres IMSI du terminal UE (pour International Mobile Subscriber Identity en anglais) et un identifiant du serveur MME ayant pris en charge le terminal UE. De tels paramètres IMSI permettent d'identifier de manière unique le compte client de l'utilisateur du terminal UE. Un tel message est par exemple un message Update Location Request du protocole Diameter. Le serveur HSS stocke ainsi l'identifiant du MME ayant pris en charge le terminal UE en association avec l'identifiant IMSI du terminal UE.

En retour, le serveur HSS envoie au serveur MME un message, par exemple un message Update Location Answer du protocole Diameter, comprenant :
∘ la liste de tous les points d'accès réseau, autrement appelé APN (pour Access Point Name en anglais) par l'homme du métier, que le terminal UE peut utiliser pour transporter des données relatives aux services de communication que le terminal UE souhaite utilisé,
∘ une indication d'un point d'accès réseau à utiliser par défaut, et
∘ des paramètres de QoS (pour Qualité of Service en anglais) associés à chaque point d'accès réseau compris dans la liste.

Par point d'accès réseau, on entend ici un APN pour Access Point Name en anglais, traduit en français par nom de point d'accès. Il est connu de l'homme du métier qu'un APN ou nom de point d'accès est un identifiant qui permet un terminal d'un utilisateur de téléphonie mobile d'un réseau 2G ou 3G de se connecter à un sous-système (par exemple Internet ou IMS) en identifiant le nœud GGSN (pour Gateway GPRS Support Node en anglais) qu'il peut utiliser. L'APN est généralement constitué d'un code identifiant le GGSN, et donc le sous-système derrière ce GGSN, et des codes MCC et MNC identifiant l'opérateur du réseau mobile *(*3GPP TS123 003 v8.8.0 release 8 (2010-04) Digital Cellular Telecom System (Phase 2+)- Universal Mobile Telecommunications System (UMTS) Numbering, addressing and identification, section 9*)..*

De tels points d'accès réseau sont déterminés par le serveur HSS en fonction du profil client qui est défini selon l'abonnement de l'utilisateur du terminal UE auprès de son opérateur.

Le serveur MME établit ensuite une porteuse par défaut (ou default bearer en anglais) associée au point d'accès réseau par défaut utilisé par le terminal UE. Par exemple, le point d'accès réseau par défaut est un point d'accès réseau associé au réseau Internet, appelé par la suite APN Internet. Le serveur MME communique avec la passerelle SGW (pour Serving Gateway en anglais) du réseau nominal qui détermine la passerelle d'accès PGW (pour Packet Data Network Gateway en anglais) que le terminal doit utiliser pour accéder au réseau de communication IP nominal.
- la passerelle SGW détermine la passerelle d'accès PGW à utiliser en fonction des paramètres du point d'accès réseau pour lequel le MME a établi une porteuse par défaut. Dans l'exemple décrit ici, la passerelle SGW sélectionne la passerelle d'accès PGW_I qui est placé en interconnexion du réseau d'accès mobile de l'opérateur du terminal UE et du réseau de communication Internet.
- La passerelle d'accès PGW_I alloue une première adresse IP au terminal UE. Une telle première adresse IP permet au terminal UE d'accéder aux services de l'Internet via le point d'accès réseau APN Internet établi précédemment. Un tel point d'accès réseau est associé à une QoS (pour Quality of Service en anglais) dit « best effort » en anglais.
- Lorsque le terminal UE est compatible avec le service de communication VoLTE, le terminal UE demande au réseau nominal l'établissement d'une porteuse par défaut associée à un deuxième point d'accès réseau, appelé APN IMS par la suite, pour transporter les données relatives au service de communication VoLTE La porteuse par défaut associée à point d'accès réseau APN IMS est associée à une QoS prédéterminée. Par exemple, une telle QoS est définie à l'aide d'un paramètre QCI (pour QoS Class Identifier en anglais) d'une valeur 5. Une telle valeur de QCI indique que les données transportées via le point d'accès réseau APN IMS sont transportées de manière prioritaire, avec très peu de pertes de paquet.
- pour le point d'accès réseau APN IMS tel que défini ci-dessus, la passerelle SGW va sélectionner une passerelle d'accès PGW IMS placé en interconnexion du réseau d'accès mobile de l'opérateur du terminal UE et du sous-système IMS de l'opérateur du terminal UE.
- la passerelle PGW IMS alloue une deuxième adresse IP au terminal UE. Une telle deuxième adresse IP permet au terminal UE d'accéder aux services de communication fournis par le sous-système IMS du réseau de communication nominal, tel que le service VoLTE.

Le point d'accès réseau APN IMS du terminal UE est ainsi établi. Le terminal UE active alors une pile protocolaire, ici une pile selon le protocole SIP IMS pour fournir les services de communications mis en œuvre selon le protocole SIP sur une architecture IMS, tels que les services VoLTE et RCS ou autre. Une telle pile protocolaire comprend un ensemble d'automates permettant de fournir les services de communication au terminal UE. Lorsque la pile protocolaire SIP IMS est activée, le terminal UE s'enregistre auprès du sous-système IMS de l'opérateur nominal pour pouvoir accéder aux services de communication VoLTE et RCS par exemple. Une telle requête d'enregistrement est par exemple envoyée vers le serveur P-CSCF du réseau nominal sous la forme d'un message SIP Register. L'adresse IP du serveur P-CSCF a été fournie au terminal UE lors de l'établissement du point d'accès réseau APN IMS du terminal UE. Classiquement, le message SIP Registrer est transmis par le P-CSCF au S-CSCF du réseau nominal de sorte à authentifier le terminal UE à partir des données d'authentification fournies par le serveur HSS du réseau nominal.

Lorsque l'authentification est réussie, le serveur S-CSCF envoie au terminal UE un message SIP 2000k informant le terminal UE que l'authentification a réussi et que le service de communication VoLTE est disponible.

La procédure de « Third Party Registration » définie par le protocole SIP, permet d'informer des serveurs d'applications de l'enregistrement d'un terminal dans le sous-système du réseau de communication, de sorte que les serveurs d'applications ainsi informés puissent activés des services relatifs au terminal UE.

Comme le terminal UE est compatible RCS, le message SIP Register envoyé au serveur P-CSCF comprend un identifiant des services RCS supportés par le terminal dans le champ d'adresse de contact (AoC pour Adress Of Contact en anglais) du message SIP Registrer. Le serveur S-CSCF est ainsi informé que le terminal UE supporte les services RCS.

Selon la procédure de « Third Party Registration », le serveur S-CSCF informe alors le serveur d'application RCS du réseau nominal de l'enregistrement du terminal UE. Ainsi, le serveur d'application RCS active le service de communication RCS pour le terminal UE.

Ainsi, selon le mécanisme décrit en relation avec la figure 1, le terminal UE peut mettre en œuvre le service de communication VoLTE et le service de communication RCS via une seule pile protocolaire SIP IMS activée au sein du terminal UE. En effet, de tels services utilisent le même protocole de signalisation SIP.

Afin de différencier les services de communication VoLTE et RCS lors de leur mise en œuvre par le terminal UE, le sous-système IMS du réseau nominal et le terminal UE identifient chaque service à partir des identifiants de services présents dans un champ AoC des messages émis ou reçus relatifs au service de communication mis en œuvre.

Dans le cas d'une communication établie selon le service de communication VoLTE, les flux média de la communication seront transmis selon le protocole RTP/RTCP et gérés par un équipement MGW compatible du réseau nominal.

Dans le cas d'une communication de type messaging établie selon le service de communication RCS, les flux média de la communication seront transmis selon le protocole MSRP et gérés par un équipement MGW compatible du réseau nominal.

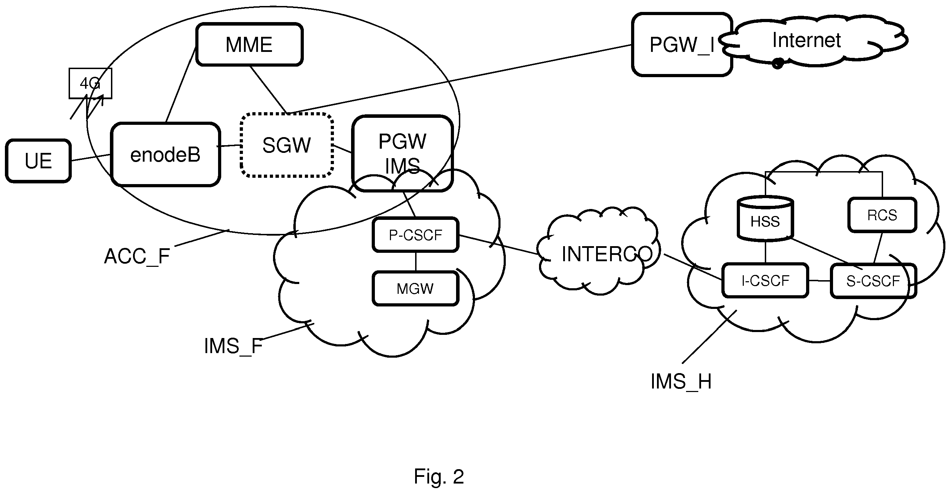

La figure 2 illustre schématiquement comment le terminal UE accède aux services VoLTE et RCS fournis par l'opérateur de son réseau nominal lorsque ce terminal UE est connecté à un réseau de communication mobile visité.

Dans l'exemple décrit ici, l'opérateur du réseau nominal et l'opérateur du réseau visité ont négociés des accords de « roaming » pour le service de communication VoLTE. Ainsi, le sous-système IMS_H du réseau nominal et le sous-système IMS_F du réseau visité sont interconnectés par un réseau d'interconnexion INTERCO. Pour plus de clarté, seuls les éléments d'un sous-système (cœur) de réseau de communication pertinents pour la description de l'invention ont été représentés ici.

Selon l'exemple décrit ici, le terminal UE s'attache au réseau visité en se connectant au réseau d'accès ACC_F du réseau visité via l'eNodeB du réseau visité. Le MME du réseau visité contacte le HSS du réseau nominal afin d'effectuer l'authentification du terminal UE. Lorsque l'authentification est réussie, le serveur MME du réseau visité transmet au HSS du réseau nominal un message comprenant les paramètres IMSI du terminal UE et un identifiant du serveur MME ayant pris en charge le terminal UE. Le serveur HSS du réseau nominal peut alors détecter à partir de l'identifiant du serveur MME que le terminal UE est en situation de « roaming ». Comme l'opérateur du réseau nominal et l'opérateur du réseau visité ont négocié des accords de « roaming » pour le service de communication VoLTE, le serveur HSS envoie alors au serveur MME du réseau visité une liste de points d'accès réseau comprenant un point d'accès réseau APN IMS et un point d'accès réseau APN Internet.

Dans l'exemple décrit ici, il est supposé que le point d'accès réseau APN Internet fonctionne en mode d'interconnexion dit « Home Routed » en anglais. Dans un tel mode d'interconnexion, la passerelle SGW du réseau visité est interconnectée à la passerelle PGW_I du réseau nominal. Dans l'exemple décrit ici, il est supposé que le point d'accès réseau APN IMS fonctionne en mode d'interconnexion dit « Local Break Out » en anglais. Dans un tel mode d'interconnexion, le serveur P-CSCF du sous-système IMS_F est interconnecté au serveur I-CSCF/S-CSCF du sous-système IMS_H. Les flux de signalisation SIP transitent alors par le serveur P-CSCF du réseau visité, puis par le serveur I/S-CSCF du réseau nominal.

L'enregistrement du terminal UE auprès du sous-système IMS_H du réseau nominal est fait par l'envoi d'un message SIP Register via le serveur P-CSCF du réseau visité, puis via le serveur I/S-CSCF du réseau nominal. L'enregistrement du terminal UE et l'activation des services RCS est ensuite réalisé comme décrit en relation avec la figure 1.

Il apparait que lorsque le réseau visité ne supporte pas le service de communication RCS ou lorsqu'un accord de « roaming » n'a pas été négocié pour ce service, le terminal UE ne peut pas avoir accès au service de communication RCS. Cependant, une telle indisponibilité du service RCS n'est pas connue du terminal UE lorsqu'il est connecté au réseau visité. En effet, l'enregistrement du terminal UE pour le service de communication VoLTE a réussi puisque le sous-système IMS_F et le sous-système IMS_H sont interconnectés. Le terminal UE a donc activé une pile protocolaire apte à mettre en œuvre les services de communication VoLTE et RCS. Cependant, si aucun accord de « roaming » n'a été négocié pour le service de communication RCS ou si l'équipement MGW du réseau visité ne supporte pas la gestion des flux média du service de communication RCS, lorsque le terminal UE essaiera d'établir une communication RCS de type messaging avec un autre terminal, le sous-système IMS_F rejettera une telle demande de communication. Ainsi, le terminal UE n'aura pas accès au service de communication RCS lorsqu'il est connecté au réseau visité.

Une solution à un tel problème est d'activer au sein du terminal UE une deuxième pile protocolaire SIP en utilisant un point d'accès réseau fonctionnant en mode « Home Routed » dès que le terminal UE détecte qu'il est connecté au réseau de communication visité et non au réseau de communication nominal. Par exemple, dans le cas décrit en relation avec la figure 2, le terminal UE peut activer une deuxième pile protocolaire SIP en utilisant le point d'accès réseau APN Internet dès qu'il est connecté au réseau visité. Ainsi, le terminal UE accède aux services de communication fournis par le réseau nominal via le point d'accès réseau APN Internet mais avec une qualité de service associée à un tel point d'accès réseau dit « best effort » et donc non garantie. L'utilisateur du terminal UE peut subir alors une importante baisse de la qualité d'expérience dans son utilisation des services de communication lorsqu'il est en situation de « roaming ».

Une telle solution n'est pas non plus optimale en ce qui concerne la consommation de la batterie du terminal UE. En effet, l'activation de piles protocolaires nécessite des ressources importantes du terminal UE. De plus, l'activation d'une deuxième pile protocolaire impacte également les ressources du réseau de communication nominal, puisqu'elle implique un enregistrement supplémentaire du terminal UE dans le sous-système IMS_H pour les services de communication que cette pile met en œuvre, par exemple RCS.

De plus, l'utilisation d'une telle pile protocolaire supplémentaire n'est pas toujours nécessaire. En effet, si des accords de « roaming » ont été négociés entre les opérateurs pour le service de communication RCS, l'activation d'une telle pile protocolaire supplémentaire n'est pas utile. Dans ce cas, une telle solution n'est même pas souhaitable puisque la qualité de service associée à une telle pile protocolaire est inférieure à la qualité de service du service de communication RCS qui serait associée à la pile SIP IMS utilisant le point d'accès réseau APN IMS.

On suppose par la suite que l'opérateur du réseau nominal définit une politique pour accéder à des services de communication, tels que le service RCS, en fonction de la connexion du terminal UE. L'opérateur du réseau nominal stocke dans le réseau nominal, par exemple une base de données client, des données relatives aux points d'accès réseau à utiliser qui dépendent du service de communication auquel le terminal souhaite accéder, du réseau nominal ou visité auquel le terminal est connecté, éventuellement du type de connexion (2G/3G/4G, WIFI, réseau fixe, etc...), de l'abonnement de l'utilisateur du terminal, etc...Par exemple, dans l'exemple décrit en relation avec la figure 2, lorsqu'il est détecté que le terminal UE est connecté au réseau visité, le point d'accès réseau que le terminal UE doit utiliser pour accéder au service de communication RCS est un point d'accès réseau APN Internet du réseau nominal ou un point d'accès réseau HOS (pour Home Operator Service en anglais) du réseau nominal, lorsqu'un tel point d'accès réseau HOS existe.

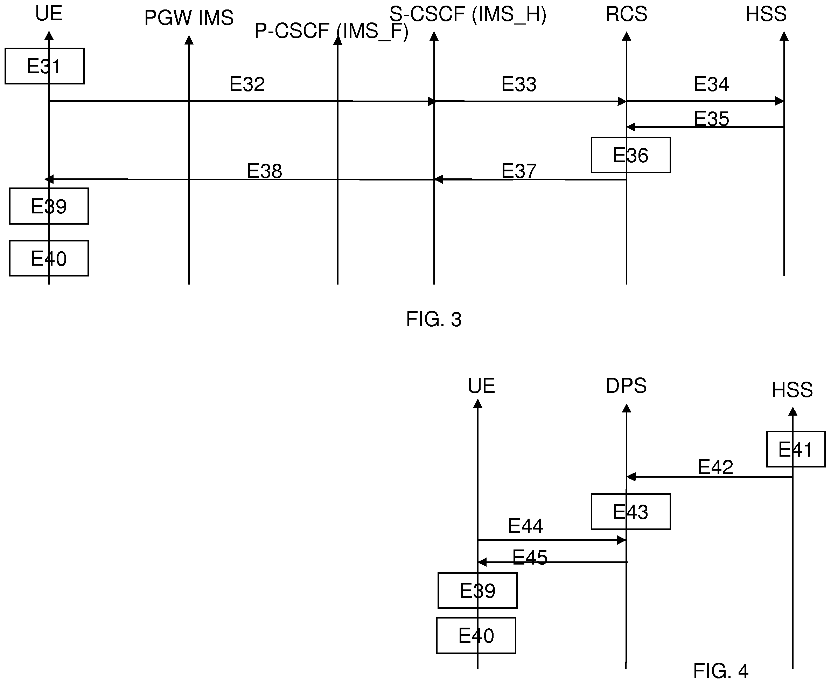

La figure 3 illustre des étapes du procédé de configuration d'un terminal UE selon un mode particulier de réalisation de l'invention. Il est supposé ici que le réseau de communication visité et le réseau de communication nominal sont interconnectés tel que décrit en relation avec la figure 2. Au cours d'une étape E31, le terminal UE se connecté au réseau de communication visité via le réseau d'accès ACC_F selon la procédure d'attachement telle que décrite en relation avec les figures 1 et 2. Selon une telle procédure d'attachement :
- la passerelle PGW IMS du réseau visité alloue une adresse IP au terminal UE, et
- le serveur MME du réseau visité établit une porteuse par défaut d'un premier point d'accès réseau APN IMS associé à une QoS prédéterminée, par exemple avec une valeur de QCI = 5.

A l'étape E31, le terminal UE active une pile protocolaire SIP IMS associée au premier point d'accès réseau APN IMS et s'enregistre auprès du sous-système IMS_H pour le service de communication VoLTE comme expliqué en relation avec la figure 2. Ainsi, le premier point d'accès réseau APN IMS est utilisé par le terminal UE pour accéder au service de communication VoLTE. Lors d'une étape E32, le terminal UE envoie une requête d'enregistrement à destination du serveur P-CSCF du sous-système IMS-F pour s'enregistrer auprès du sous-système IMS_H et avoir accès au service de communication RCS.

Une telle requête d'enregistrement est par exemple un message SIP REGISTER, comprenant un identifiant d'un tel service, par exemple via des « Features Tags » spécifiques au service de communication RCS inséré dans un champ AoC du message SIP REGISTER. La requête d'enregistrement envoyée par le terminal UE est envoyée via la pile protocolaire SIP IMS activée par le terminal UE et transportée via le premier point d'accès réseau APN IMS.

Lors de l'étape E32, le serveur P-CSCF du réseau visité transmet une telle requête d'enregistrement au serveur I/S-CSCF du réseau nominal qui la reçoit lors de l'étape E32.

On suppose ici que le mécanisme de « Third Party Registration » est mis en œuvre selon un mode « Terminated ». Un tel mode implique que le serveur S-CSCF transmet la requête d'enregistrement au serveur d'application RCS avant d'envoyer une réponse à la requête d'enregistrement au terminal UE.

Suite à la réception par le serveur S-CSCF de la requête d'enregistrement, le serveur S-CSCF effectue l'authentification du terminal UE lors d'une étape E33.

Lors de l'étape E33, le serveur S-CSCF transmet la requête d'enregistrement au serveur d'application RCS. Suite à la réception par le serveur d'application RCS de la requête d'enregistrement, le serveur d'application RCS interroge le serveur HSS afin d'obtenir les données relatives à l'abonnement de l'utilisateur du terminal UE, lors d'une étape E34. Une telle interrogation est par exemple faite via une requête « User Data Request » du protocole Diameter. Le serveur HSS a reçu lors de l'étape E31, l'information selon laquelle le terminal UE est connecté au réseau visité. Par exemple, le serveur HSS a obtenu cette information grâce à l'identifiant du serveur MME qui a pris en charge le terminal UE lors de son attachement au réseau d'accès ACC_F.

Ainsi, au cours d'une étape E35, le serveur HSS détecte que le terminal UE est connecté au réseau de communication visité et non au réseau de communication nominal.

Lors de l'étape E35, le serveur HSS détermine à partir d'une information stockée dans le réseau nominal si un accord de « roaming » a été négocié pour le service de communication RCS avec l'opérateur du réseau de communication visité.

En fonction des informations stockées dans le réseau nominal relatives à de tels accords, le serveur HSS détermine si le service de communication RCS doit être mis en œuvre par le terminal UE via une pile protocolaire distincte de la pile protocolaire utilisée pour le service de communication VoLTE.

Lorsque le service de communication RCS doit être mis en œuvre par le terminal UE via une pile protocolaire distincte de la pile protocolaire utilisée pour le service de communication VoLTE, le serveur HSS envoie au serveur d'application RCS une réponse, par exemple sous la forme d'une réponse « User Data Answser » du protocole Diameter, indiquant que le terminal UE est en situation de « roaming » et qu'une pile protocolaire supplémentaire doit être activée au niveau du terminal UE. Le serveur d'application RCS reçoit une telle réponse lors de l'étape E35.

Au cours d'une étape E36, le serveur d'application RCS détermine à partir de la réponse du serveur HSS que le terminal UE est en situation de « roaming » et qu'une pile protocolaire supplémentaire doit être activée par le terminal UE.

Au cours d'une étape E37, le serveur d'application RCS transmet au serveur S-CSCF un message de réponse, par exemple un message d'erreur SIP 4xx, indiquant que le terminal UE ne peut pas accéder au service de communication RCS via le premier point d'accès réseau APN IMS.

Au cours d'une étape E38, le serveur S-CSCF transmet un tel message de réponse au terminal UE qui la reçoit via le premier point d'accès réseau APN IMS. Lors de l'étape E38, le terminal UE obtient ainsi grâce au message de réponse une donnée indiquant que le terminal ne peut pas accéder au service de communication RCS via le premier point d'accès réseau.

Au cours d'une étape E39, le terminal UE détermine un deuxième point d'accès réseau à utiliser pour accéder au service de communication RCS. Par exemple, le terminal UE dispose d'une liste de point d'accès réseau reçue lors de l'étape E31 d'attachement au réseau de communication visité. Le terminal UE peut alors sélectionner un point d'accès réseau par défaut, par exemple le point d'accès réseau APN Internet associé à une QoS dit « best effort ». En variante, le terminal UE dispose dans sa carte SIM, de la liste des points d'accès réseau qui peuvent être utilisés en situation « Home » (lorsque le terminal UE est connecté au réseau nominal) et en situation de « Roaming out » (lorsque le terminal UE est connecté à un réseau visité).

Au cours d'une étape E40 de configuration du terminal UE, lorsque le deuxième point d'accès réseau sélectionné n'est déjà monté, c'est-à-dire qu'une porteuse par défaut n'a été établie au préalable pour le terminal UE pour le deuxième point d'accès réseau sélectionné, le terminal UE demande d'abord l'établissement d'une porteuse par défaut associée au deuxième point d'accès sélectionné. Une telle requête est effectuée auprès du réseau nominal lorsque le deuxième point d'accès réseau est un point d'accès du réseau nominal ou auprès du réseau visité lorsque le deuxième point d'accès est un point d'accès du réseau visité.

Lors de l'étape E40, lorsque le deuxième point d'accès réseau sélectionné est monté, c'est-à-dire qu'une porteuse par défaut a été établie pour le terminal UE pour le deuxième point d'accès réseau sélectionné, le terminal UE active alors une pile protocolaire associée au deuxième point d'accès réseau déterminé lors de l'étape E39. Puis, le terminal UE envoie à l'aide d'une telle pile protocolaire et via le deuxième point d'accès réseau une requête d'accès au service de communication RCS. Dans l'exemple décrit ici, la requête d'accès est une requête d'enregistrement envoyée par le terminal UE au sous-système IMS_H via la passerelle d'accès PGW_I.

Selon un mode particulier de réalisation de l'invention, au cours de l'étape E36, le serveur d'application RCS détermine un deuxième point d'accès réseau à utiliser par le terminal UE pour accéder au service de communication RCS, via une deuxième pile protocolaire activée dans le terminal UE. Une telle détermination est faite à partir de données de l'opérateur du réseau de communication nominal. Par exemple, l'opérateur du réseau de communication nominal peut imposer que le deuxième point d'accès réseau soit le point d'accès réseau APN Internet offrant une qualité de service dit « best effort » ou un point d'accès réseau HOS (pour Home Operator Service en anglais) correspondant à un point d'accès réseau associé à une porteuse par défaut associée à une QoS garantie, c'est-à-dire avec une valeur de QCI prédéterminée supérieure à 1, mais dont les flux transitent via la passerelle PGW_I du réseau nominal placée en interconnexion du réseau d'accès mobile du réseau visité au réseau IP Internet du réseau nominal. Un tel point d'accès réseau permet de faire transiter les flux média par le réseau Internet ou par le réseau d'interconnexion des réseaux nominal et visité mais avec une qualité de service garantie.

Le serveur d'applications RCS insère un identifiant du deuxième point d'accès réseau déterminé dans le message de réponse envoyé lors de l'étape E37.

Ainsi, selon ce mode particulier de réalisation de l'invention, lors de l'étape E39, le terminal UE détermine le deuxième point d'accès réseau à partir de l'identifiant du deuxième point d'accès réseau compris dans le message de réponse reçu lors de l'étape E38.

Selon un autre mode particulier de réalisation de l'invention, suite à l'enregistrement du terminal UE auprès du sous-système IMS_H lors de l'étape E32, le serveur S-CSCF envoie un message SIP 2000k au terminal UE indiquant que le terminal UE est enregistré auprès du sous-système IMS_H.

Selon ce mode particulier de réalisation de l'invention, le mécanisme de « Third Party Registration » peut être mis en œuvre indifféremment selon le mode « Continue » ou « Terminated ».

Lorsque le terminal UE reçoit le message d'acquittement de son enregistrement, le terminal UE envoie un message d'interrogation à destination du serveur RCS. Un tel message d'interrogation peut être envoyé sous la forme d'un message SIP OPTIONS avec un champ SIP URI comprenant l'adresse du serveur RCS du réseau nominal. Suite à la réception par le serveur RCS d'un tel message d'interrogation, le serveur RCS interroge le serveur HSS pour déterminer si le terminal UE est connecté au réseau nominal ou à un réseau visité. Une telle étape est similaire à l'étape E34 décrite à la figure 3. La réponse du serveur HSS est similaire à l'étape E35 décrite à la figure 3. La réponse du serveur HSS comprend une donnée indiquant si le terminal UE peut accéder au service RCS via le point d'accès réseau APN IMS et/ou le deuxième point d'accès réseau à utiliser à la place.

A partir de la réponse du HSS, le serveur RCS détermine le deuxième point d'accès réseau que le terminal UE doit utiliser pour accéder au service RCS et insère une telle information dans un message de réponse. Un tel message de réponse est par exemple sous la forme d'un message SIP 2000k. Le message de réponse est envoyé par le serveur RCS au terminal UE.

Suite à la réception par le terminal UE du message de réponse envoyé par le serveur RCS, le terminal UE détermine si le point d'accès réseau indiqué dans le message de réponse est identique au point d'accès réseau APN IMS à partir duquel le terminal UE s'est enregistré pour le service de communication VoLTE.

Le point d'accès réseau indiqué dans le message de réponse envoyé par le serveur RCS correspond à une donnée indiquant si le terminal UE peut accéder au service RCS via le point d'accès réseau APN IMS.

Lorsqu'un tel point d'accès réseau est différent du point d'accès réseau APN IMS, le terminal UE effectue l'étape E40 telle que décrite en relation avec la figure 3.

En variante, le message d'interrogation envoyé par le terminal UE n'est envoyé que lorsque le terminal UE détecte qu'il n'est pas connecté au réseau nominal.

Une telle détection est par exemple effectuée par le terminal UE en comparant l'identité GUTI (pour Globally Unique Temporary UE Identity en anglais) fournie par le serveur MME lors de la procédure d'attachement au réseau d'accès, avec une donnée IMSI du terminal UE. Par exemple, la donnée IMSI du terminal UE est stockée dans la carte SIM du terminal UE. Le terminal UE peut détecter qu'il n'est pas connecté au réseau nominal lorsque le champ MCC (pour Mobile Code Country en anglais) de l'identifiant GUTI du serveur MME est différent du champ MCC de l'identifiant IMSI du terminal UE.

Selon cette variante, les ressources du réseau nominal et du terminal UE sont optimisées puisque le message d'interrogation n'est envoyé que lorsque cela est nécessaire.

Selon un autre mode particulier de réalisation de l'invention, suite à l'enregistrement du terminal UE auprès du sous-système IMS_H lors de l'étape E32, le serveur S-CSCF envoie un message SIP 2000k au terminal UE indiquant que le terminal UE est enregistré auprès du sous-système IMS_H.

Selon ce mode particulier de réalisation de l'invention, le mécanisme de « Third Party Registration » peut être mis en œuvre indifféremment selon le mode « Continue » ou « Terminated ».

Lorsque le terminal UE reçoit le message d'acquittement de son enregistrement, le terminal UE envoie un message de souscription à un « Event Package » (paquet d'événements) spécifique à l'invention à destination du serveur RCS ou d'un autre serveur dédié. Un tel « Event Package » est destiné à fournir à un terminal UE connecté à un réseau visité la liste des points d'accès réseau qu'il peut utiliser pour accéder aux services de communication fournis par son réseau nominal. Le message de souscription est un message SIP SUBSCRIBE.

Sur réception d'un tel message, le serveur RCS répond par l'envoi au terminal UE d'un message SIP 2000k. De manière similaire aux étapes E34 et E35 décrites en relation avec la figure 3, le serveur RCS détermine une liste L1 des points d'accès réseau disponibles pour le terminal UE et les services de communication auxquels le terminal UE a accès via de tels points d'accès réseau Puis le serveur RCS envoie un message NOTIFY au terminal UE comprenant la liste L1. Par exemple, la liste L1 du message NOTIFY reçu par le terminal UE comprend :
- une information indiquant que le service de communication VoLTE est disponible via un point d'accès réseau APN IMS fonctionnant en mode Local Break Out,
- une information indiquant que le service de communication RCS est disponible via un point d'accès réseau APN Internet fonctionnant en mode Home Routed.

La liste L1 indique ici également le mode de fonctionnement du point d'accès réseau, c'est-à-dire le type d'interconnexion utilisée pour accéder au service de communication.

Suite à la réception par le terminal UE de la liste L1, le terminal UE répond au serveur RCS par un message SIP 2000k.

A partir de la liste L1 reçue, le terminal UE détermine si le point d'accès réseau indiqué pour le service de communication RCS est identique au point d'accès réseau APN IMS à partir duquel le terminal UE s'est enregistré pour le service de communication VoLTE.

Les informations de la liste L1 correspondent donc à une donnée indiquant si le terminal UE peut accéder au service RCS via le point d'accès réseau APN IMS.

Lorsque le point d'accès réseau indiqué dans la liste L1 pour le service de communicaiton RCS est différent du point d'accès réseau APN IMS, le terminal UE effectue l'étape E40 telle que décrite en relation avec la figure 3.

En variante, comme pour le mode de réalisation décrit précédemment, la souscription à l'Event Package spécifique n'est envoyée que lorsque le terminal UE détecte qu'il n'est pas connecté au réseau nominal.

La figure 4 illustre des étapes du procédé de fourniture selon un autre mode particulier de réalisation de l'invention.

Dans ce mode particulier de réalisation de l'invention, le terminal UE se connecte au réseau de communication visité tel que décrit en relation avec la figure 2.

Le terminal UE s'enregistre également auprès du sous-système IMS_H tel que décrit en relation avec la figure 2. Selon ce mode particulier de réalisation de l'invention, le fonctionnement du serveur d'application RCS n'est pas modifié. Le mécanisme de « Third Party Registration » peut être mis en œuvre selon le mode « Terminated » ou « Continue ». Selon ce mode particulier de réalisation de l'invention, le terminal UE n'est pas informé de l'indisponibilité du service de communication RCS suite à l'enregistrement du terminal UE pour ce service auprès du sous-système IMS_H tel que décrit en relation avec la figure 2.

Pour configurer le service de communication RCS, le terminal UE utilise un fichier de configuration comprenant les paramètres liés au service, tels que l'identité de l'utilisateur, mot de passe, domaine, les capacités RCS supportées par le sous-système IMS_H , etc...

Un tel fichier de configuration est par exemple au format XML. Il est téléchargé par le terminal UE au démarrage du terminal UE, ou lorsque la période de validité du fichier de configuration a expiré, ou encore lorsque le terminal UE n'a pas réussi à s'enregistrer auprès du sous-système IMS_H pour le service de communication RCS.

Pour rappel, lors de l'attachement du terminal UE au réseau visité, le serveur HSS du réseau nominal obtient, l'information selon laquelle le terminal UE est connecté au réseau visité et non au réseau nominal. Par exemple, le serveur HSS a obtenu cette information grâce à l'identifiant du serveur MME qui a pris en charge le terminal UE lors de son attachement au réseau d'accès ACC_F.

Suite à l'obtention d'une telle information ou suite à une interrogation du serveur d'application RCS (similaire à une étape E34 décrite en relation avec la figure 3), lors d'une étape E41, le serveur HSS détermine à partir d'une information stockée dans le réseau nominal si un accord de « roaming » a été négocié pour le service de communication RCS avec l'opérateur du réseau de communication visité.

En fonction des informations stockées dans le réseau nominal relatives à de tels accords, le serveur HSS détermine si le service de communication RCS doit être mis en œuvre par le terminal UE via une pile protocolaire distincte de la pile protocolaire utilisée pour le service de communication VoLTE.

Lors d'une étape E42, le serveur HSS envoie une telle information à un serveur d'approvisionnement d'équipements DPS (pour Device Provisioning Serveur en anglais) du réseau nominal IMS_H.

En variante, le serveur HSS détermine un point d'accès réseau que le terminal UE doit utiliser pour accéder au service RCS lorsqu'il est connecté au réseau visité. Par exemple, une telle détermination est effectuée à partir de données de l'opérateur nominal stockées dans le réseau nominal. Lors de l'étape E42, le serveur HSS envoie au serveur DPS l'identifiant du point d'accès réseau déterminé.

Lors d'une étape E43, le serveur DPS détermine alors à partir de l'information reçue du serveur HSS que le terminal UE est en situation de « roaming ». Lors de l'étape E43, le serveur DPS détermine un point d'accès réseau à utiliser par le terminal UE pour accéder au service RCS lorsque le serveur HSS ne lui a pas fourni un tel identifiant. Par exemple, le serveur DPS détermine un point d'accès réseau de type APN Internet ou APN HOS à partir des données stockées par l'opérateur du réseau nominal.

Le serveur HSS stocke l'identifiant déterminé ou reçu selon le cas.

Au cours d'une étape E44, le terminal UE envoie une requête au serveur DPS pour obtenir un fichier de configuration du terminal UE relatif au service de communication RCS. Par exemple, une telle requête est sous la forme d'une requête selon le protocole http. Lors de l'étape E44 le serveur DPS reçoit une telle requête.

Lors d'une étape E45, le serveur DPS met à jour le fichier de configuration du terminal UE en insérant l'identifiant du point d'accès réseau stocké lors de l'étape E44 dans le fichier de configuration. Puis, lors de l'étape E45, le serveur DPS envoie le fichier de configuration au terminal UE.

Au cours de l'étape E45, le terminal UE reçoit le fichier de configuration. A partir du fichier de configuration comprenant un identifiant du point d'accès réseau à utiliser pour accéder au service de communication RCS, lorsque le point d'accès réseau indiqué dans le fichier de configuration est différent du point d'accès réseau APN IMS utilisé par le terminal UE pour accéder au service de communication VoLTE, le terminal UE obtient ainsi une donnée indiquant que le terminal UE ne peut pas accéder au service de communication RCS via le point d'accès réseau APN IMS.

Au cours d'une étape E39, le terminal UE détermine, à partir du fichier de configuration, le point d'accès réseau à utiliser pour accéder au service de communication RCS.

Au cours d'une étape E40 de configuration du terminal UE, le terminal UE active alors une pile protocolaire associée au point d'accès réseau déterminé lors de l'étape E39. Puis, le terminal UE envoie à l'aide d'une telle pile protocolaire et via le point d'accès réseau identifié dans le fichier de configuration, une requête d'accès au service de communication RCS. Dans l'exemple décrit ici, la requête d'accès est une requête d'enregistrement envoyée par le terminal UE au sous-système IMS_H via la passerelle d'accès PGW_I.

Selon un autre mode particulier de réalisation de l'invention, la donnée indiquant si le terminal peut accéder au service de communication RCS via le point d'accès réseau APN IMS utilisé par le terminal UE pour accéder au service de communication VoLTE est obtenue à partir d'une donnée associée au point d'accès réseau APN IMS. Une telle donnée est obtenue lors de la procédure d'attachement du terminal au réseau visité décrit en relation avec la figure 2. Une telle donnée est envoyée au terminal UE par le serveur MME avec la liste des points d'accès réseau qu'il peut utiliser pour accéder à ses services de communication. Par exemple, chaque point d'accès réseau de la liste est associé à une liste d'identifiants de services de communication qui peuvent être utilisés via le point d'accès réseau considéré. Par exemple, dans l'exemple décrit en relation avec la figure 2, le point d'accès réseau APN IMS est associé à une liste indiquant un service de communication VoLTE, ViLTE si les opérateurs du réseau visité et du réseau nominal ont négocié des accords de « roaming » pour de tels services de communication. Le point d'accès réseau APN Internet est associé à une liste indiquant un service de communication RCS et data (données en anglais) si les opérateurs du réseau visité et du réseau nominal n'ont pas négocié des accords de « roaming ». Le serveur MME du réseau visité obtient les données associées aux points d'accès réseau via le serveur HSS du réseau nominal.

La figure 5 illustre un terminal 50 apte à mettre en œuvre le procédé de configuration selon un mode particulier de réalisation de l'invention décrit en relation avec les figures 2, 3 ou 4.

Le terminal 50 comprend un module de traitement 54, comprenant notamment un module de stockage MEM, par exemple une mémoire, et une unité de traitement PROC, équipée par exemple d'un microprocesseur. L'unité de traitement PROC est pilotée par un programme d'ordinateur PG mettant en œuvre le procédé de configuration tel que décrit en relation avec les figures 2, 3 ou 4. A l'initialisation, les instructions de code du programme d'ordinateur PG sont par exemple chargées en mémoire MEM avant d'être exécutées par le processeur de l'unité de traitement PROC.

Le processeur de l'unité de traitement PROC met en œuvre les étapes du procédé de configuration du terminal d'un utilisateur abonné auprès d'un opérateur d'un réseau de communication, dit réseau nominal, pour accéder à un service de communication, selon les instructions du programme d'ordinateur PG.

Le terminal 50 est configuré pour accéder à un premier service de communication via un premier point d'accès réseau, par exemple au moyen d'une pile protocolaire P1 activée dans le terminal 50 et associée au premier point d'accès réseau.

Le terminal 50 comporte un module de communication COM permettant au terminal 50 de se connecter à un réseau de communication, notamment un réseau de communication différent du réseau nominal, dit réseau visité.

Le processeur de l'unité de traitement PROC met notamment en oeuvre :
- une étape de d'obtention d'une donnée indiquant si le terminal 50 peut accéder à un deuxième service de communication via ledit premier point d'accès réseau,
- dans le cas où le terminal 50 ne peut pas accéder au deuxième service de communication via le premier point d'accès réseau :
   - une étape de détermination d'un deuxième point d'accès réseau à utiliser par le terminal 50 pour accéder au deuxième service de communication,
   - une étape de configuration du terminal 50 pour que le terminal 50 puisse accéder au deuxième service de communication via le deuxième point d'accès réseau.

Notamment, le terminal 50 est configuré pour activer une deuxième pile protocolaire P2 lorsque le deuxième point d'accès réseau est différent du premier point d'accès réseau.

Classiquement, le terminal 50 comprend des moyens d'acquisition MIC de flux média (audio et/ou vidéo) tels qu'un micro et/ou une caméra et des moyens de restitution HP de flux média (audio, vidéo, texte, ...) tels que des haut-parleurs et éventuellement un écran.

Le terminal 50 peut être un téléphone mobile, une tablette, ou tout équipement connecté apte à établir des communications sur un réseau de communication mobile.

La figure 6 illustre un dispositif 60 apte à mettre en œuvre le procédé de fourniture selon un mode particulier de réalisation de l'invention décrit en relation avec les figures 2, 3 ou 4.

Le dispositif 60 comprend un module de traitement 64, comprenant notamment un module de stockage MEM6, par exemple une mémoire, et une unité de traitement PROC6, équipée par exemple d'un microprocesseur. L'unité de traitement PROC6 est pilotée par un programme d'ordinateur PG6 mettant en œuvre le procédé de fourniture tel que décrit en relation avec les figures 2, 3 ou 4.

A l'initialisation, les instructions de code du programme d'ordinateur PG6 sont par exemple chargées en mémoire MEM6 avant d'être exécutées par le processeur de l'unité de traitement PROC6.

Le processeur de l'unité de traitement PROC6 met en œuvre les étapes du procédé de fourniture à un terminal UE d'un utilisateur abonné auprès d'un opérateur d'un réseau de communication, dit réseau nominal, d'une donnée indiquant si le terminal UE peut accéder à un premier service de communication via un premier point d'accès réseau, selon les instructions du programme d'ordinateur PG6.

Le processeur de l'unité de traitement PROC6 met notamment en oeuvre :
- une étape de réception par le dispositif 60, d'une requête relative au premier service de communication, envoyée par le terminal UE,
- une étape de détection que le terminal UE est connecté à un réseau de communication différent du réseau nominal, dit réseau visité,
- lorsque le terminal UE est connecté au réseau visité, une étape de détermination d'une donnée indiquant si le terminal UE peut accéder au premier service de communication via ledit premier point d'accès réseau,
- une étape d'envoi au terminal UE d'un message comprenant ladite donnée.

Selon un mode particulier de réalisation de l'invention, le processeur de l'unité de traitement PROC6 met également en œuvre une étape détermination d'un deuxième point d'accès réseau à utiliser par le terminal UE pour accéder au premier service de communication, le message envoyé comprenant un identifiant du deuxième point d'accès réseau.

Le dispositif 60 comporte un module de communication COM6 permettant au dispositif 60 d'envoyer au terminal UE un message comprenant ladite donnée.

Le dispositif 60 peut être un serveur du réseau nominal, tel que le serveur DPS décrit à la figure 4, ou le serveur RCS décrit en relation avec la figure 3 ou encore le serveur HSS décrit en relation avec la figure 2.

## Revendications

1. Procédé de configuration d'un terminal (UE) d'un utilisateur abonné auprès d'un opérateur d'un réseau de communication, dit réseau nominal, pour accéder à un service de communication, le procédé comprenant, lorsque le terminal est connecté au réseau nominal, une étape d'activation au sein du terminal (UE) d'une première pile protocolaire associée à un premier point d'accès réseau pour accéder à un premier service de communication et à un deuxième service de communication distinct du premier service de communication, , le procédé est **caractérisé en ce que**, lorsque le terminal (UE) est connecté à un réseau de communication différent du réseau nominal, dit réseau visité, il comprend,:
- une étape d'activation de ladite première pile protocolaire associée au premier point d'accès réseau pour accéder au premier service de communication,
- une étape d'obtention (E38) d'une donnée indiquant si le terminal peut accéder à un deuxième service de communication via ledit premier point d'accès réseau,
- dans le cas où le terminal ne peut pas accéder au deuxième service de communication via le premier point d'accès réseau :
- une étape de détermination (E39) d'un deuxième point d'accès réseau à utiliser par le terminal pour accéder au deuxième service de communication,
- une étape d'activation au sein du terminal d'une deuxième pile protocolaire associée au deuxième point d'accès réseau (E40) pour accéder au deuxième service de communication via le deuxième point d'accès réseau.

2. Procédé selon la revendication 1, dans lequel la donnée indiquant si le terminal peut accéder à un deuxième service de communication via ledit premier point d'accès réseau est obtenue à partir d'un message de réponse à une requête envoyée par le terminal à un serveur du réseau nominal, via le premier point d'accès réseau.

3. Procédé selon la revendication 2, dans lequel la requête est:
- une requête d'enregistrement envoyée à un serveur d'enregistrement pour enregistrer le terminal pour au moins le premier service de communication ou pour au moins le deuxième service de communication, ou
- un message d'interrogation envoyé à un serveur d'application, ledit serveur d'application étant un serveur dédié au deuxième service de communication, ou
- un message de souscription à un mécanisme de souscription-notification relatif à un événement correspondant à la situation selon laquelle le terminal est connecté à un réseau différent du réseau nominal.

4. Procédé selon la revendication 2, dans lequel ledit message de réponse comprend une donnée indiquant le deuxième point d'accès réseau.

5. Procédé selon la revendication 1, dans lequel la donnée indiquant si le terminal peut accéder à un deuxième service de communication via ledit premier point d'accès réseau est obtenue à partir d'un fichier de configuration relatif au deuxième service de communication reçu par le terminal depuis un serveur du réseau nominal.

6. Procédé selon la revendication 5, dans lequel le fichier de configuration comprend une donnée indiquant un point d'accès réseau à utiliser lorsque le terminal est connecté au réseau visité.

7. Procédé selon la revendication 1, dans lequel la donnée indiquant si le terminal peut accéder à un deuxième service de communication via ledit premier point d'accès réseau est obtenue à partir d'une donnée associée au premier point d'accès réseau obtenue lors de la procédure d'attachement du terminal au réseau visité.

8. Procédé de fourniture à un terminal (UE) d'un utilisateur abonné auprès d'un opérateur d'un réseau de communication, dit réseau nominal, d'une donnée indiquant si le terminal (UE) peut accéder à un premier service de communication via un premier point d'accès réseau, le procédé de fourniture est **caractérisé en ce qu'**il comprend :
- une étape de réception (E33) par un serveur du réseau nominal (RCS), d'une requête relative au premier service de communication, envoyée par le terminal (UE) via le premier point d'accès réseau, la requête étant une requête d'enregistrement du terminal pour au moins le premier service de communication auprès du réseau nominal, ledit premier point d'accès réseau étant utilisé par le terminal pour accéder à un deuxième service de communication,
- une étape de détection (E35) que le terminal (UE) est connecté à un réseau de communication différent du réseau nominal, dit réseau visité,
- lorsque le terminal (UE) est connecté au réseau visité, une étape de détermination (E36) d'une donnée indiquant si le terminal (UE) peut accéder au premier service de communication via ledit premier point d'accès réseau,
- une étape d'envoi (E37) au terminal d'un message comprenant ladite donnée.

9. Procédé de fourniture selon la revendication 8, comprenant en outre une étape de détermination d'un deuxième point d'accès réseau à utiliser par le terminal pour accéder au premier service de communication, le message envoyé comprenant un identifiant du deuxième point d'accès réseau.

10. Procédé de fourniture selon la revendication 8, dans lequel le premier point d'accès réseau est un point d'accès réseau du réseau visité.

11. Terminal d'un utilisateur abonné auprès d'un opérateur d'un réseau de communication, dit réseau nominal, pour accéder à un service de communication, le terminal étant configuré pour, lorsque le terminal est connecté au réseau nominal, activer une première pile protocolaire associée à un premier point d'accès réseau pour accéder à un premier service de communication et à un deuxième service de communication distinct du premier service de communication, , le terminal est **caractérisé en ce que**, lorsque le terminal est connecté à un réseau de communication différent du réseau nominal, dit réseau visité, le terminal est configuré pour :
- activer ladite première pile protocolaire associée au premier point d'accès réseau pour accéder au premier service de communication,
- obtenir une donnée indiquant si le terminal peut accéder à un deuxième service de communication via ledit premier point d'accès réseau,
- dans le cas où le terminal ne peut pas accéder au deuxième service de communication via le premier point d'accès réseau, le terminal est configuré pour :
- déterminer un deuxième point d'accès réseau à utiliser par le terminal pour accéder au deuxième service de communication,
- activer une deuxième pile protocolaire associée au deuxième point d'accès réseau pour accéder au deuxième service de communication via le deuxième point d'accès réseau.

12. Dispositif de fourniture à un terminal d'un utilisateur abonné auprès d'un opérateur d'un réseau de communication, dit réseau nominal, d'une donnée indiquant si le terminal peut accéder à un premier service de communication via un premier point d'accès réseau, le dispositif de fourniture est **caractérisé en ce qu'**il est configuré pour:
- recevoir une requête relative au premier service de communication envoyée par le terminal via le premier point d'accès réseau, la requête étant une requête d'enregistrement du terminal pour au moins le premier service de communication auprès du réseau nominal, ledit premier point d'accès réseau étant utilisé par le terminal pour accéder à un deuxième service de communication,
- détecter si le terminal est connecté à un réseau de communication différent du réseau nominal, dit réseau visité,
- lorsque le terminal est connecté au réseau visité, déterminer une donnée indiquant si le terminal peut accéder au premier service de communication via ledit premier point d'accès réseau,
- envoyer au terminal un message comprenant ladite donnée.

13. Programme d'ordinateur comportant des instructions de code de programme pour l'exécution des étapes du procédé de configuration selon l'une quelconque des revendications 1 à 7 ou des étapes du procédé de fourniture selon l'une quelconque des revendications 8 à 9, lorsque le programme est exécuté par un processeur.

## Patentansprüche

1. Verfahren zur Konfiguration eines Endgerätes (UE) eines Benutzers, der bei einem Betreiber eines Kommunikationsnetzes, Heimatnetz genannt, angemeldet ist, um auf einen Kommunikationsdienst zuzugreifen, wobei das Verfahren, wenn das Endgerät mit dem Heimatnetz verbunden ist, einen Schritt der Aktivierung, innerhalb des Endgerätes (UE), eines ersten Protokollstapels umfasst, der einem ersten Netzzugangspunkt zugeordnet ist, um auf einen ersten Kommunikationsdienst und auf einen von dem ersten Kommunikationsdienst verschiedenen zweiten Kommunikationsdienst zuzugreifen, wobei das Verfahren **dadurch gekennzeichnet ist, dass** es , wenn das Endgerät (UE) mit einem Kommunikationsnetz verbunden ist, das von dem Heimatnetz verschieden ist, besuchtes Netz genannt, umfasst:
- einen Schritt der Aktivierung des ersten Protokollstapels, der dem ersten Netzzugangspunkt zugeordnet ist, um auf den ersten Kommunikationsdienst zuzugreifen,
- einen Schritt der Gewinnung (E38) eines Datenelements, das angibt, ob das Endgerät über den ersten Netzzugangspunkt auf einen zweiten Kommunikationsdienst zugreifen kann,
- in dem Falle, wenn das Endgerät nicht über den ersten Netzzugangspunkt auf den zweiten Kommunikationsdienst zugreifen kann:
- einen Schritt der Bestimmung (E39) eines zweiten Netzzugangspunktes, der von dem Endgerät zu verwenden ist, um auf den zweiten Kommunikationsdienst zuzugreifen,
- einen Schritt der Aktivierung, innerhalb des Endgerätes, eines zweiten Protokollstapels, der dem zweiten Netzzugangspunkt zugeordnet ist (E40), um über den zweiten Netzzugangspunkt auf den zweiten Kommunikationsdienst zuzugreifen.

2. Verfahren nach Anspruch 1, wobei das Datenelement, das angibt, ob das Endgerät über den ersten Netzzugangspunkt auf einen zweiten Kommunikationsdienst zugreifen kann, aus einer Antwortnachricht auf eine Anfrage gewonnen wird, die von dem Endgerät über den ersten Netzzugangspunkt an einen Server des Heimatnetzes gesendet wurde.

3. Verfahren nach Anspruch 2, wobei die Anfrage ist:
- eine Registrierungsanfrage, die an einen Registrierungsserver gesendet wird, um das Endgerät für wenigstens den ersten Kommunikationsdienst oder für wenigstens den zweiten Kommunikationsdienst zu registrieren, oder
- eine Abfragenachricht, die an einen Anwendungsserver gesendet wird, wobei der Anwendungsserver ein Server ist, der speziell für den zweiten Kommunikationsdienst bestimmt ist, oder
- eine Nachricht zur Anmeldung bei einem Anmeldungs-Benachrichtigungs-Mechanismus in Bezug auf ein Ereignis, das der Situation entspricht, gemäß welcher das Endgerät mit einem von dem Heimatnetz verschiedenen Netz verbunden ist.

4. Verfahren nach Anspruch 2, wobei die Antwortnachricht ein Datenelement umfasst, das den zweiten Netzzugangspunkt angibt.

5. Verfahren nach Anspruch 1, wobei das Datenelement, das angibt, ob das Endgerät über den ersten Netzzugangspunkt auf einen zweiten Kommunikationsdienst zugreifen kann, aus einer sich auf den zweiten Kommunikationsdienst beziehenden Konfigurationsdatei erhalten wird, die das Endgerät von einem Server des Heimatnetzes empfängt.

6. Verfahren nach Anspruch 5, wobei die Konfigurationsdatei ein Datenelement umfasst, das einen Netzzugangspunkt angibt, der zu verwenden ist, wenn das Endgerät mit dem besuchten Netz verbunden ist.

7. Verfahren nach Anspruch 1, wobei das Datenelement, das angibt, ob das Endgerät über den ersten Netzzugangspunkt auf einen zweiten Kommunikationsdienst zugreifen kann, aus einem dem ersten Netzzugangspunkt zugeordneten Datenelement erhalten wird, das während der Prozedur des Anschlusses des Endgerätes an das besuchte Netz erhalten wird.

8. Verfahren zur Bereitstellung, für ein Endgerät (UE) eines Benutzers, der bei einem Betreiber eines Kommunikationsnetzes, Heimatnetz genannt, angemeldet ist, eines Datenelements, das angibt, ob das Endgerät (UE) über einen ersten Netzzugangspunkt auf einen ersten Kommunikationsdienst zugreifen kann, wobei das Verfahren zur Bereitstellung **dadurch gekennzeichnet ist, dass** es umfasst:
- einen Schritt des Empfangens (E33), durch einen Server des Heimatnetzes (RCS), einer Anfrage in Bezug auf den ersten Kommunikationsdienst, die von dem Endgerät (UE) über den ersten Netzzugangspunkt gesendet wurde, wobei die Anfrage eine Registrierungsanfrage des Endgerätes für wenigstens den ersten Kommunikationsdienst bei dem Heimatnetz ist, wobei der erste Netzzugangspunkt von dem Endgerät verwendet wird, um auf einen zweiten Kommunikationsdienst zuzugreifen,
- einen Schritt der Detektion (E35), ob das Endgerät (UE) mit einem Kommunikationsnetz verbunden ist, das von dem Heimatnetz verschieden ist, besuchtes Netz genannt,
- wenn das Endgerät (UE) mit dem besuchten Netz verbunden ist, einen Schritt der Bestimmung (E36) eines Datenelements, das angibt, ob das Endgerät (UE) über den ersten Netzzugangspunkt auf den ersten Kommunikationsdienst zugreifen kann,
- einen Schritt des Sendens (E37) einer Nachricht, die das Datenelement umfasst, an das Endgerät.

9. Verfahren zur Bereitstellung nach Anspruch 8, welches außerdem einen Schritt der Bestimmung eines zweiten Netzzugangspunktes umfasst, der von dem Endgerät zu verwenden ist, um auf den ersten Kommunikationsdienst zuzugreifen, wobei die gesendete Nachricht eine Kennung des zweiten Netzzugangspunktes umfasst.

10. Verfahren zur Bereitstellung nach Anspruch 8, wobei der erste Netzzugangspunkt ein Netzzugangspunkt des besuchten Netzes ist.

11. Endgerät eines Benutzers, der bei einem Betreiber eines Kommunikationsnetzes, Heimatnetz genannt, angemeldet ist, um auf einen Kommunikationsdienst zuzugreifen, wobei das Endgerät dafür ausgelegt ist, wenn das Endgerät mit dem Heimatnetz verbunden ist, einen ersten Protokollstapel zu aktivieren, der einem ersten Netzzugangspunkt zugeordnet ist, um auf einen ersten Kommunikationsdienst und auf einen von dem ersten Kommunikationsdienst verschiedenen zweiten Kommunikationsdienst zuzugreifen, wobei das Endgerät **dadurch gekennzeichnet ist, dass**, wenn das Endgerät mit einem Kommunikationsnetz verbunden ist, das von dem Heimatnetz verschieden ist, besuchtes Netz genannt, das Endgerät ausgelegt ist zum:
- Aktivieren des ersten Protokollstapels, der dem ersten Netzzugangspunkt zugeordnet ist, um auf den ersten Kommunikationsdienst zuzugreifen,
- Gewinnen eines Datenelements, das angibt, ob das Endgerät über den ersten Netzzugangspunkt auf einen zweiten Kommunikationsdienst zugreifen kann,
- in dem Falle, wenn das Endgerät nicht über den ersten Netzzugangspunkt auf den zweiten Kommunikationsdienst zugreifen kann, das Endgerät ausgelegt ist zum:
- Bestimmen eines zweiten Netzzugangspunktes, der von dem Endgerät zu verwenden ist, um auf den zweiten Kommunikationsdienst zuzugreifen,
- Aktivieren eines zweiten Protokollstapels, der dem zweiten Netzzugangspunkt zugeordnet ist, um über den zweiten Netzzugangspunkt auf den zweiten Kommunikationsdienst zuzugreifen.

12. Vorrichtung zur Bereitstellung, für ein Endgerät eines Benutzers, der bei einem Betreiber eines Kommunikationsnetzes, Heimatnetz genannt, angemeldet ist, eines Datenelements, das angibt, ob das Endgerät über einen ersten Netzzugangspunkt auf einen ersten Kommunikationsdienst zugreifen kann, wobei die Vorrichtung zur Bereitstellung **dadurch gekennzeichnet ist, dass** sie ausgelegt ist zum:
- Empfangen einer Anfrage in Bezug auf den ersten Kommunikationsdienst, die von dem Endgerät über den ersten Netzzugangspunkt gesendet wurde, wobei die Anfrage eine Registrierungsanfrage des Endgerätes für wenigstens den ersten Kommunikationsdienst bei dem Heimatnetz ist, wobei der erste Netzzugangspunkt von dem Endgerät verwendet wird, um auf einen zweiten Kommunikationsdienst zuzugreifen,
- Detektieren, ob das Endgerät mit einem Kommunikationsnetz verbunden ist, das von dem Heimatnetz verschieden ist, besuchtes Netz genannt,
- wenn das Endgerät mit dem besuchten Netz verbunden ist, Bestimmen eines Datenelements, das angibt, ob das Endgerät über den ersten Netzzugangspunkt auf den ersten Kommunikationsdienst zugreifen kann,
- Senden einer Nachricht, die das Datenelement umfasst, an das Endgerät.

13. Computerprogramm, welches Programmcodeanweisungen zur Ausführung der Schritte des Verfahrens zur Konfiguration nach einem der Ansprüche 1 bis 7 oder der Schritte des Verfahrens zur Bereitstellung nach einem der Ansprüche 8 bis 9, wenn das Programm von einem Prozessor ausgeführt wird, umfasst.

## Claims

1. Method for configuring a terminal (UE) of a user subscribing to an operator of a communication network, called nominal network, to access a communication service, the method comprising, when the terminal is connected to the nominal network, a step of activation in the terminal (UE) of a first protocol stack associated with a first network access point to access a first communication service and a second communication service distinct from the first communication service, the method being **characterized in that**, when the terminal (UE) is connected to a communication network different from the nominal network, called visited network, it comprises:
- a step of activation of said first protocol stack associated with the first network access point to access the first communication service,
- a step of obtaining (E38) of a datum indicating whether the terminal can access a second communication service via said first network access point,
- in the case where the terminal cannot access the second communication service via the first network access point:
- a step of determination (E39) of a second network access point to be used by the terminal to access the second communication service,
- a step of activation in the terminal of a second protocol stack associated with the second network access point (E40) to access the second communication service via the second network access point.

2. Method according to Claim 1, in which the datum indicating whether the terminal can access a second communication service via said first network access point is obtained from a response message to a request sent by the terminal to a server of the nominal network, via the first network access point.

3. Method according to Claim 2, in which the request is :
- a registration request sent to a registration server to register the terminal for at least the first communication service or for at least the second communication service, or
- an interrogation message sent to an application server, said application server being a server dedicated to the second communication service, or
- a subscription message to a subscription-notification mechanism relating to an event corresponding to the situation according to which the terminal is connected to a network different from the nominal network.

4. Method according to Claim 2, in which said response message comprises a datum indicating the second network access point.

5. Method according to Claim 1, in which the datum indicating whether the terminal can access a second communication service via said first network access point is obtained from a configuration file relating to the second communication service received by the terminal from a server of the nominal network.

6. Method according to Claim 5, in which the configuration file comprises a datum indicating a network access point to be used when the terminal is connected to the visited network.

7. Method according to Claim 1, in which the datum indicating whether the terminal can access a second communication service via said first network access point is obtained from a datum associated with the first network access point obtained during the procedure for attachment of the terminal to the visited network.

8. Method for providing a terminal (UE) of a user subscribing to an operator of a communication network, called nominal network, with a datum indicating whether the terminal (UE) can access a first communication service via a first network access point, the provision method being **characterized in that** it comprises:
- a step of reception (E33), by a server of the nominal network (RCS), of a request relating to the first communication service, sent by the terminal (UE) via the first network access point, the request being a request for registration of the terminal for at least the first communication service with the nominal network, said first network access point being used by the terminal to access a second communication service,
- a step of detection (E35) that the terminal (UE) is connected to a communication network different from the nominal network, called visited network,
- when the terminal (UE) is connected to the visited network, a step of determination (E36) of a datum indicating whether the terminal (UE) can access the first communication service via said first network access point,
- a step of sending (E37) to the terminal of a message comprising said datum.

9. Provision method according to Claim 8, further comprising a step of determination of a second network access point to be used by the terminal to access the first communication service, the message sent comprising an identifier of the second network access point.

10. Provision method according to Claim 8, in which the first network access point is a network access point of the visited network.

11. Terminal of a user subscribing to an operator of a communication network, called nominal network, to access a communication service, the terminal being configured to, when the terminal is connected to the nominal network, activate a first protocol stack associated with a first network access point to access a first communication service and a second communication service distinct from the first communication service, the terminal being **characterized in that**, when the terminal is connected to a communication network different from the nominal network, called visited network, the terminal is configured to:
- activate said first protocol stack associated with the first network access point to access the first communication service,
- obtain a datum indicating whether the terminal can access a second communication service via said first network access point,
- in the case where the terminal cannot access the second communication service via the first network access point, the terminal is configured to:
- determine a second network access point to be used by the terminal to access the second communication service,
- activate a second protocol stack associated with the second network access point to access the second communication service via the second network access point.

12. Device for providing a terminal of a user subscribing to an operator of a communication network, called nominal network, with a datum indicating whether the terminal can access a first communication service via a first network access point, the provision device being **characterized in that** it is configured to:
- receive a request relating to the first communication service sent by the terminal via the first network access point, the request being a request for registration of the terminal for at least the first communication service with the nominal network, said first network access point being used by the terminal to access a second communication service,
- detect whether the terminal is connected to a communication network different from the nominal network, called visited network,
- when the terminal is connected to the visited network, determine a datum indicating whether the terminal can access the first communication service via said first network access point,
- send to the terminal a message comprising said datum.

13. Computer program comprising program code instructions for the execution of the steps of the configuration method according to any one of Claims 1 to 7 or of the steps of the provision method according to either one of Claims 8 and 9, when the program is run by a processor.
